## Europäisches Patentamt

## European Patent Office

## Office européen des brevets

(11) Publication number : **0 387 444 B1**

# EUROPEAN PATENT SPECIFICATION

(45) Date of publication of patent specification :
**14.06.95 Bulletin 95/24**

(51) Int. Cl.⁶ : **G11B 21/21, // G11B5/60**

(21) Application number : **89310670.8**

(22) Date of filing : **17.10.89**

(54) **Subambient pressure air bearing.**

(30) Priority : **17.03.89 US 325222**

(43) Date of publication of application :
**19.09.90 Bulletin 90/38**

(45) Publication of the grant of the patent :
**14.06.95 Bulletin 95/24**

(84) Designated Contracting States :
**AT BE CH DE ES FR GB GR IT LI LU NL SE**

(56) References cited :
**EP-A- 0 015 383**
**EP-A- 0 076 361**
**EP-A- 0 277 414**
**N.E.C. RESEARCH AND DEVELOPMENT, no.**
**68, January 1983, pages 90-100, Tokyo, JP ; N.**
**TAGAWA : "Optimum design consideration for**
**air-lubricated slider bearings of film head"**

(73) Proprietor : **QUANTUM CORPORATION**
**500 McCarthy Boulevard**
**Milpitas California 95035 (US)**

(72) Inventor : **Hsia, Yiao-Tee**
**7 Westport Drive**
**Shrewsbury Massachusetts 01545 (US)**

(74) Representative : **Goodman, Christopher et al**
**Eric Potter & Clarkson**
**St. Mary's Court**
**St. Mary's Gate**
**Nottingham NG1 1LE (GB)**

## Description

Background of the Invention

This invention relates to sliders for recording heads used with storage disks.

In a typical magnetic or optical disk storage system, a read/write head is mounted on the rear end of a slider. The slider is supported by a positioning arm/suspension assembly and configured so that when the disk is rotated rapidly, the slider flies at a height above the disk. To achieve high storage densities, the slider must be flown close to the disk surface. One technique is to mechanically bias the positioning assembly to force the slider toward the disk. Another proposed approach is to contour the slider bottom so that it generates sub-ambient (or negative) pressure to draw the bottom of the slider down near the disk.

In flight, sliders are subject to roll, which is the banking of the slider relative to a horizontal axis of the positioning arm. Sliders are also subject to yaw, where the trailing edge of a slider is either closer to (positive yaw) or farther from (negative yaw) the disk center than is the slider leading edge. The yaw angle is measured as the angle between the longitudinal axis of the slider and the tangent to the disk track.

In US-A-4553184 there is described a magnetic head slider having a high pressure producing lower cavity defining a path for passing compressed air streams produced by a rotating magnetic disk beneath the head. This head differs significantly from the present invention which relates to a head with a sub-ambient pressure cavity and thus does not require a high external load to maintain a low flying height.

In EP-A-0107411 there is described a floating head slider which includes a mechanism to stabilise the head in the pitch direction (parallel to the air flows between the head and the disk), but does not address the stability of the head to roll (ie. in the transverse direction).

In EP-A-0277414 there is described a self-loading air bearing slider incorporating a lower cavity which includes side vents located adjacent to a trailing edge cross rail.

In EP-A-0076361 there is described a self-loading air bearing slider reflecting the subject-matter of the preamble of claim 1 and providing a leading tapered section on a cross rail and a cavity defined by the cross rail and two side rails which may flare out toward the trailing edge of the slider.

Summary of the Invention

The present invention provides a slider for moving a transducer in accordance with claim 1.

In one aspect of the invention, a slider for carrying a transducer near to the surface of a storage disk at varying yaw angles, the slider being subject to roll according to yaw angle, includes at least two rails, the rails having elongated surfaces for facing the disk and oriented generally along the intended direction of motion of the disk, the rails coupled to each other so as to define a cavity, the cavity configured to produce subambient pressure tending to draw the slider toward the disk, and at least one of the rail surfaces having at least one detail configured to counteract the roll associated with yaw angle.

An embodiment of this aspect may include one or any combination of the following features:

The rails are coupled by a ramp section.

The detail extends across the width of a rail surface.

Both of the rails have a respective detail.

The details respectively each include a uniform groove.

A respective detail extends across the width of each respective rail.

The detail extends across the width of a rail surface and defines a first and second section of that rail, the second section forming a polygon with an inner wall longer than its outer wall.

Respectively for each rail, a respective detail defines a first and second section of each rail, the second section forming a polygon with an inner wall longer than its outer wall.

The second section is larger than the first section.

The first section is larger than the second section.

The detail is a groove with parallel sides.

The trailing side of the detail is oriented at an acute angle to the longitudinal axis of the slider.

The slider further includes a ramp section connected between the rails at one end of the rails and defining an upstream end of the slider, the rails' other ends terminating at a downstream end of the slider, a detail located on a rail nearer the upstream end of the slider than the downstream end of the slider.

The cavity has parallel sides.

The slider further includes a ramp section connecting between the rails, the rails coming closer together as they extend away from the ramp section.

The rails are tapered in.

The rails are parallel and not tapered.

The rails are not parallel and not tapered.

The rails have different configurations, one rail being longer than the other.

The rails have different configurations, one rail being wider than the other.

The detail is chevron-like.

At least one rail has a foil section defining a flared oblique edge.

In another aspect of the invention, a subambient pressure slider is provided for carrying a transducer near to the surface of a storage disk including a pair of coupled rails defining a pocket, the rails having elongated surfaces for facing the disk and oriented generally along the intended direction of motion of the disk, at least one groove being cut in at least one rail nearer to the leading end of the rail than to the trailing end of the rail, and the groove being oriented at an angle such that its leading end is nearer the inner side of the rail and its trailing end is nearer the outer side of the rail.

An embodiment of this aspect may include one or any combination of the following features:

The rails have different configurations, one rail being longer than the other.

The rails have different configurations, one rail being wider than the other.

The groove is a chevron.

At least one rail has a foil section defining a flared oblique edge.

In another aspect of the invention, there is provided a method for determining pressure relief features of a subambient pressure slider for carrying a transducer near to the surface of a storage disk, the slider including a pair of rails having elongated surfaces for facing the disk and oriented generally along the intended direction of motion of the disk, at least one pressure mitigating feature (such as a chevron) and foil (such as a flared oblique edge) defined on at least one of the rails, including the steps of iteratively solving the following slip-flow Reynolds equation:

$$\frac{\partial}{\partial x}\left[ph^3\frac{\partial p}{\partial x}\left(1 + \frac{6\lambda}{h}\right)\right] + \frac{\partial}{\partial y}\left[ph^3\frac{\partial p}{\partial y}\left(1 + \frac{6\lambda}{h}\right)\right] = 6\mu U\frac{\partial}{\partial x}(ph)$$

(where h = film thickness, p = pressured, U = linear velocity of disk, x = spatial coordinate in length, y = spatial coordinate in width, $\mu$ = viscosity of gas, and $\lambda$ = molecular mean free path of gas), for flying height performance, including trailing edge height, roll angle and pitch, to obtain foil flare angle and length, in a conventional manner.

Other advantages and features will become apparent from the following description of the preferred embodiment and from the claims.

## Description of the Preferred Embodiment

We first briefly describe the drawings.

Fig. 1 is a plan view of a portion of a magnetic disk storage device with a slider on an exemplary arm at zero yaw angle.

Fig. 2 is a bottom view of a prior art subambient pressure slider.

Fig. 3 is a view of a slider flying over a disk in a positive roll attitude.

Fig. 4 is a graph of simulated representative roll angle as a function of yaw angle for a conventional subambient slider and for a slider according to a preferred embodiment of the invention.

Fig. 5 is a bottom view of the slider of Fig. 2 flying at a negative yaw angle, shown looking through a "transparent" disk.

Fig. 6 is a bottom view of a preferred subambient pressure slider according to the present inventions.

Figs. 7, 8 are a side view and trailing edge view, respectively, of the slider of Fig. 6, not to scale.

Fig. 9a relates the pressure profile for an inner rail or outer rail to the rail configuration in a prior art slider.

Fig. 9b relates to the pressure profile for an inner rail or outer rail to the rail configuration in a slider according to the present invention.

Fig. 10 shows the slider of Fig. 6 oriented parallel to the direction of air flow.

Fig. 11 shows an upward-facing slider in three different orientations (positive, zero and negative yaw) relative to a disk, where the air bearing surface of the slider is shown looking through a "transparent" disk.

Fig. 12 is a graph of a simulated pressure profile at the bottom of a slider according to the preferred embodiment at zero yaw angle.

Figs. 13-15 are alternative configurations of the slider of Fig. 6.

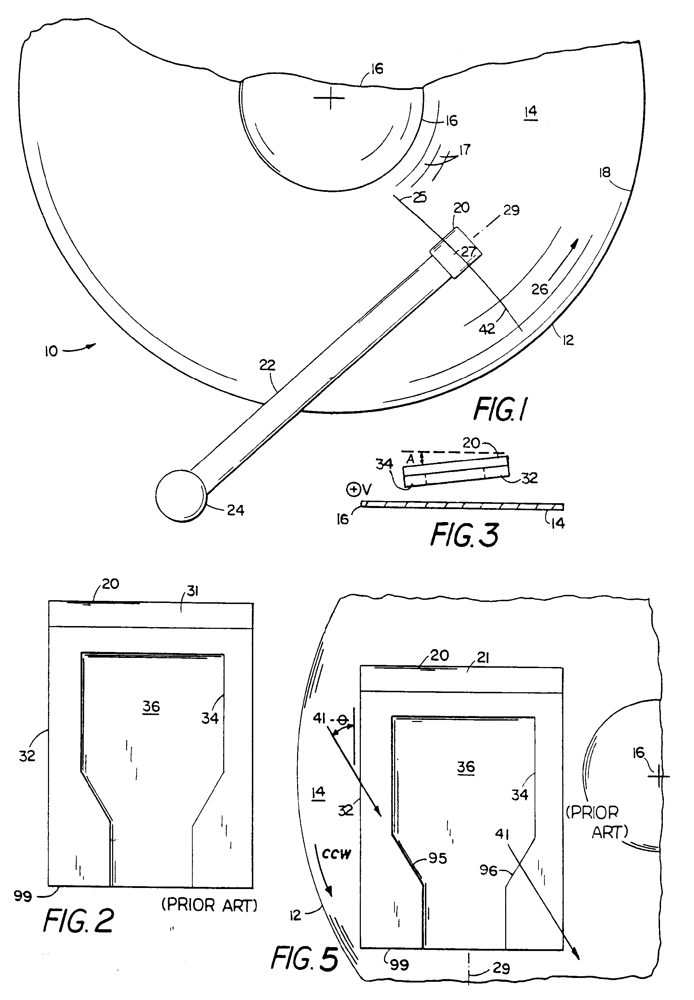

Referring to Figs. 1 and 2, a typical disk storage device 10 includes a disk 12 having a surface 14 which extends from an inner radius 16 to an outer radius 18, with a multiplicity of recording tracks 17 defined on surface 14. A read/write head (not shown) is typically located on a slider 20 along trailing edge 99 facing surface 14. Slider 20 is mounted on a positioning arm/suspension assembly 22. Arm 22 is connected to and driven by a rotary actuator 24 capable of positioning slider 20 at any point along an arc 25 extending from inner radius 16 to outer radius 18. Disk 12 rotates beneath head 20 at high speed in a direction (as indicated by arrow 26). When the slider is positioned at a point 27 approximately midway along arc 25, the longitudinal axis 29 of slider 20 is tangential to the recording track 17 at that position, with zero yaw angle. At other positions of arm 22, the slider is at a yaw angle to the tangent.

Referring to Fig. 2, a typical subambient pressure slider 20 has two rails 32, 34 that face the disk surface 14, and a subambient pressure cavity 36. Air flowing between the disk and slider past a leading ramp 31 and under rails 32, 34 creates relatively high pressure under the rails to lift the slider above surface 14. Air flowing through cavity 36 is intended to create a counteracting subambient pressure to draw the slider toward surface 14. The net result is that a lower external load is required to fly the slider for a given height.

A small, relatively constant pressure difference is generated beneath rail 32 and rail 34, even when the slider is at zero yaw angle, i.e., at the tangential location 27 (Fig. 1), because of a small difference in the linear velocity of the disk at the two different locations beneath the two rails (points nearer the inner radius 16 of disk 12 have a lower linear velocity than points nearer the outer edge).

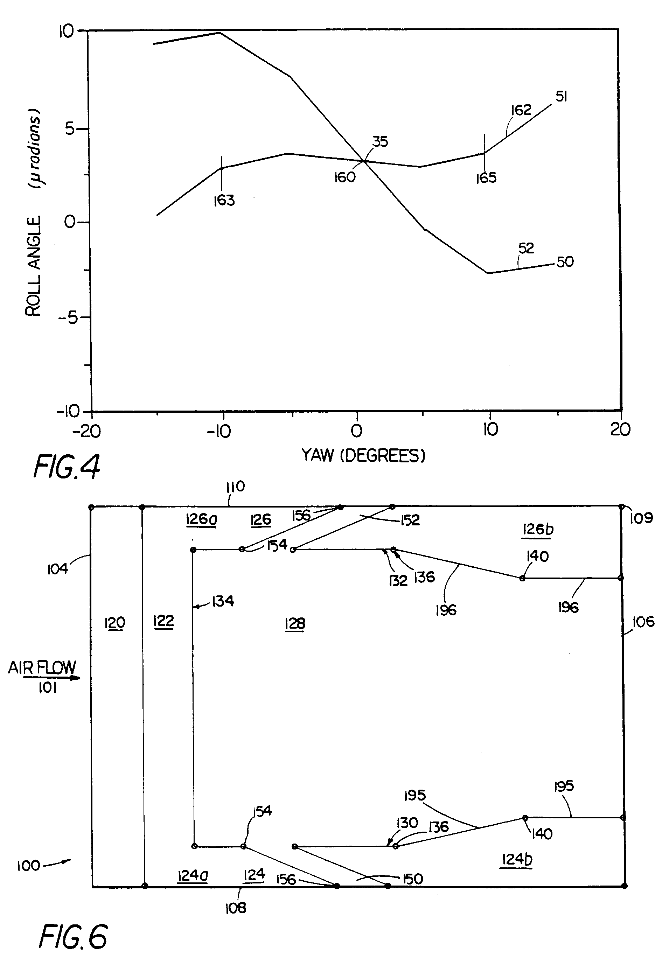

Thus, even without yaw, this pressure difference between rails 32 and 34 causes slider 20 to roll slightly. As shown in Fig. 3, the inner rail 34 flies closer to the disk center than does the outer rail 32, defining a "positive" natural roll angle A. The amount of the roll could be, e.g., 2.5 μ radians, shown at point 35 on curve 50, Fig. 4, which corresponds to the zero yaw point 27 on Fig. 1. If the slider were always kept at a zero yaw angle (i.e., tangential to the disk track), this type of roll would be relatively uniform regardless of the position of slider 20 along arc 25, and thus could be compensated such as by counterweighting.

In the configuration of Fig. 1, however, as slider 20 moves along arc 25, its yaw angle will change, resulting in a changing roll angle. These variances in roll are caused by changes in the angle of attack $\theta$ of the air flow on the slider. For example, referring to Fig. 5, with slider 20 (seen through "transparent" disk 12) at a negative yaw angle, e.g. -10°, (corresponding, for example, to point 42 on arc 25, Fig. 1) air strikes the rails of slider 20 (as indicated by air flow lines 41) at an angle of -10° ($\theta$) relative to the longitudinal axis 29 of slider 20, which causes an additional roll component (about +7 1/2 microradians) to be combined with the inherent roll effect (angle A; about +2 1/2 microradians) of the slider. This additional roll component varies nonlinearly with yaw angle in accordance with a curve like curve 50, and is thus not subject to simple compensation by counterweighting.

As can be seen in curve 50, Fig. 4, negative yaw results in a positive angular roll component which adds to the inherent roll (angle A), while positive yaw results in a relative negative roll component which competes with inherent roll (angle A). Nevertheless, we have observed that it is possible to configure a slider to neutralize or relieve the additional roll component related to yaw angle, as will be explained in detail below.

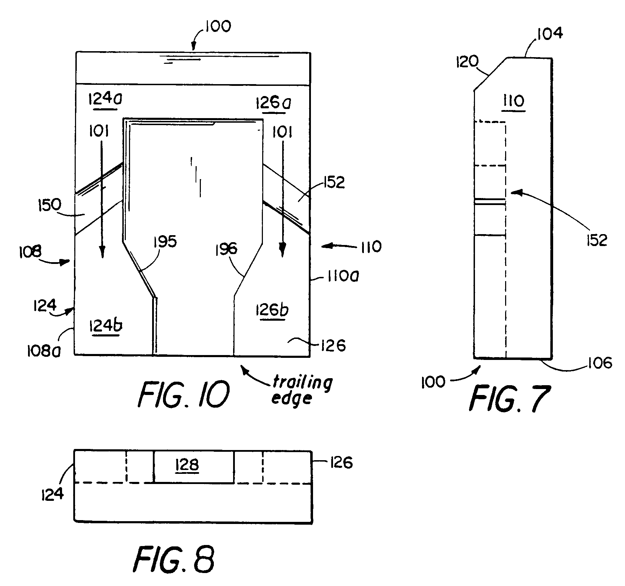

Referring to Figs. 6, 7, 8, in a preferred embodiment of the invention, rectangular slider 100 has a leading edge 104, a trailing edge 106, and two side edges 108, 110. A ramp 120 extends from leading edge 104 at an angle, for example of 50 minutes (not to scale in Fig. 7). A cross rail, or bridge, 122, located immediately downstream of ramp 120, joins two side rails 124, 126. Inner edges 130, 132 of rails 124, 126 run parallel, beginning where they connect to bridge 122 and continuing rearward to break points 136. From break points 136 to another pair of break points 140, inner edges 130, 132 define foils 195, 196 which flare inward toward each other, for example at an angle of about 15 degrees (not to scale in Fig. 6). From break points 140 foils 195, 196 extend back to trailing edge 106, and are parallel.

Inner edges 130, 132 (including foils 195, 196), together with bridge 122, enclose a subambient pressure cavity 128. Preferably, cavity 128 has a depth of from 200 microinches to 1000 microinches (5-25μm) and is open along the trailing edge. Depending on the design for a given drive, the ramp angle will typically range at or below one degree and the flare angle will range as desired.

Slider 100 includes a pair of chevrons 150, 152, that cut across rails 124, 126, and connect cavity 128 to the exterior of slider 100. Chevrons 150, 152 are located between inner edge 134 of bridge 122 and break points 136 and extend rearward at an angle from a pair of points 154 along the inner edges 130, 132, to points 156 along sides 108, 110. Preferably chevrons 150, 152 have the same depth as cavity 128. Depending upon design considerations, chevron angles and depths may be of varied configurations.

Referring to Fig. 9a, the pressure gradient under an example prior art rail 72 is shown (along line A-A) where dotted lines 184, 185, 186 relate local minima and local maxima of pressure gradient curve 180 to the configuration of rail 72.

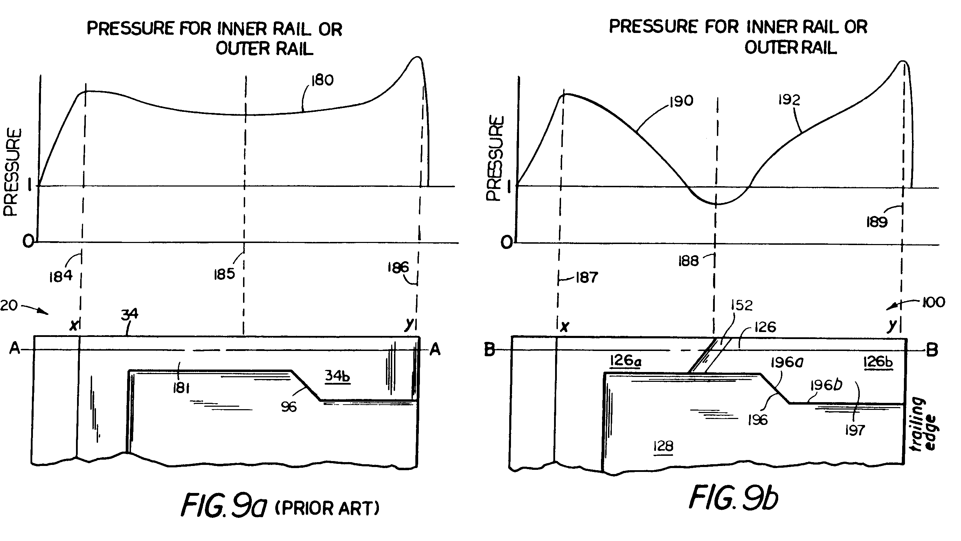

Referring now to Fig. 9b, the expected pressure gradient under rail 126 (along line B-B) in practice of the present invention has been approximated, where dotted lines 187, 188, and 189 relate local minima and local maxima of pressure gradient curve 190 to the configuration of rail 126. Fig. 9b demonstrates our belief that an entirely different gradient buildup is experienced compared to the prior art configuration of Fig. 9a. To wit: curve 190 peaks at about the beginning of cavity 128 (point X) and is relieved down to about atmospheric level or lower at chevron 152. Thereafter, the pressure gradient peaks again at point Y near the trailing edge of slider 100.

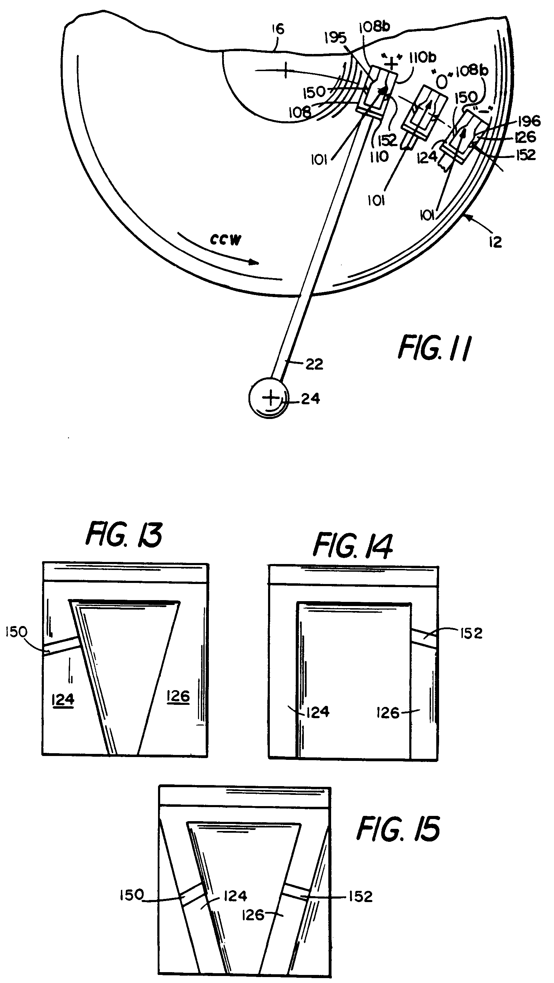

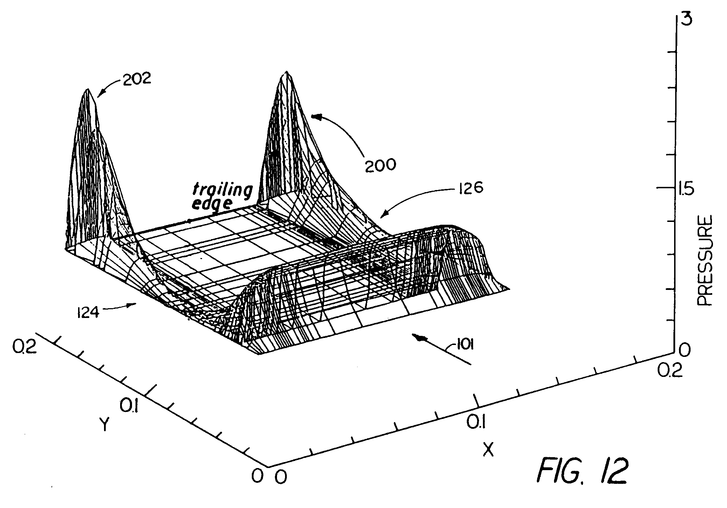

In either configuration of Fig. 9a or 9b, as slider 20 (Fig. 5) or 100 (Fig. 10) goes into negative yaw, a respective foil 96, 196 will turn into the air flow. However, owing to the chevron configuration of the invention, substantially different roll response will be experienced. This is because several factors influence the tendency for a yaw attitude to induce a roll attitude. Among these are (a) pressure gradient under the slider (such as under the rails) relative to the transverse sliding component due to yaw, and (b) the effective local wedge of any oblique edge presented by the slider. Hence, the chevron affects the gradient and the flare presents an oblique edge, as yield favorable results.

Since force is directly proportional to pressure times area, the incremental increase ($\Delta$) in pressure related to section 126b (for a negative yawed embodiment of the invention) compared to that related to equivalent section 34b (after the dotted line 185 in prior art Fig. 9a) is as shown below:

$$\frac{\Delta P126b}{\Delta P124b} \geqq \frac{\Delta P34b}{\Delta P32b}$$

The same comparison related to positive yaw is:

$$\frac{\Delta P124b}{\Delta P126b} \geqq \frac{\Delta P32b}{\Delta P34b}$$

Therefore, in practice of the present invention, as slider 100 experiences negative yaw air flow 101 impinges upon the effective wedge of foil 196 of section 126b (either solely at flare 196a or in conjunction with extension 196b) after chevron 152 of rail 126, whereupon an incremental pressure increase is generated (as indicated by the steep climb of curve 190 from low point 191). This pressure increase is greater here than that generated at section 124b, given the negative yaw of the slider, causing rail 126 to fly higher than rail 124. We speculate that foil 196 cooperates with chevron 152 to produce this favorable result. In an alternative embodiment, the flared foil 196 might not flare at all and yet still would present an oblique edge of the negatively yawed slider turned into the air flow, which, in cooperation with chevron 152, would yield the favorable result we have discovered.

Figs. 10 and 11 together show slider 100 in the positive, zero and negative yaw conditions, where it can be seen that as slider 100 yaws, not only is foil 195 or 196 presented to air flow 101, but also the now leading outside edge 108 or 110 is presented as an oblique edge. It is possible that the resultant interaction of the air flow at both the inner foil 195 or 196 and outer foil 108 or 110 (or possibly at post-chevron foils 108b or 110b) contributes to the result of the invention.

According to curve 51 of Fig. 4, in practice of the present invention, between about zero and about negative ten degrees yaw, only about zero to perhaps one-half microradians additional roll component (compared to a very substantial roll component shown in curve 50) is imparted to the slider. Beyond about negative ten degrees yaw, a negative roll component is imparted to the slider.

It will now be understood that, in the negative yaw condition, foil 195 is essentially turned away from air flow 101, although, outer foil 108 (or 108b) on rail 124 is presented to air flow 101. It is speculated that the cross-sectional area of foil 196 presented to air flow 101 should be greater than that presented by foil 108b, thus resulting in the desired gradient at rail 126, such as seen in Fig. 11.

In the positive yaw condition, the features of the invention will apply likewise to chevron 150, foil 195, rail 124 and the outer wall foil 110b, and will result in roll-reducing compensation. Comparing curves 50, 51, it will thus be seen that the invention will provide a positive roll component to cancel the relative negative roll of the positively yawed slider, at least up to about ten degrees yaw for the case shown. It will be appreciated, however, that the 10 degrees yaw is not a limitation of the invention.

Thus it will now be appreciated that for a non-zero yaw angle, chevrons 150, 152 and foils 195, 196, 108b, 110b, are not oriented symmetrically with respect to air flow 101. This lack of symmetry affects the air flow beneath rails 124, 126 and in cavity 128, resulting in a reduction of the roll-inducing pressure differential beneath the slider that would otherwise be associated with a non-zero yaw angle roll in a prior art device (see curve 50, Fig. 4). Therefore, the variation in roll angle as a function of yaw angle (typically experienced by prior art subambient pressure sliders) can be substantially reduced, or eliminated, in practice of the present invention, as indicated by curve 51 of Fig. 4. Hence, in one embodiment of the invention, between yaw angles of roughly $^+$- 10 degrees, an approximate uniformity of roll angle was measured, and nearer uniformity was experienced even beyond $^+$- 10 degrees comparing curve 51 to curve 50.

The lowered sensitivity of slider 100 to yaw angle with regard to roll angle eliminates roll as a major difficulty in the implementation of subambient pressure sliders in disk drive systems. The use of chevrons achieves this result without affecting the other characteristics of subambient pressure sliders including, for example, low flying height with low external load, higher air bearing stiffness and better damping.

Fig. 12 is a graph of a simulated pressure profile at the bottom of a slider according to the preferred embodiment at zero yaw angle.

Alternative embodiments of the invention are shown in Figs. 13-15, where rails 124, 126 assume tapered in (Fig. 13), fully parallel and not tapered (Fig. 14), and not parallel and not tapered (Fig. 15) orientations. In addition, at least one chevron 150, 152 can be provided in at least one rail 124 or 126 at any suitable location in accordance with the invention.

Furthermore, while chevron configurations have been described, other pressure impacting configurations are equally considered within the present invention, including inserts, grooves, slots, structures, details, incisions, features, passages, barriers, and the like.

The optimum configuration of a slider in practice of the present invention will depend upon desired application, e.g., for a given arm, disk, slider, radius and yaw relation, and speed, for example. Hence, determination of optimum foil flare angle length can be numerically modelled by solving the following modified Reynolds equation:

$$\frac{\partial}{\partial x}\left[ph^3\frac{\partial p}{\partial x}\left(1 + \frac{6\lambda}{h}\right)\right] + \frac{\partial}{\partial y}\left[ph^3\frac{\partial p}{\partial y}\left(1 + \frac{6\lambda}{h}\right)\right] = 6\mu U\frac{\partial}{\partial x}(ph)$$

(where h = film thickness, p = pressure, U = linear velocity of disk, x = spatial coordinate in length, y = spatial coordinate in width, $\mu$ = viscosity of gas, and $\lambda$ = molecular mean free path of gas), for flying height performance, including trailing edge height, roll angle and pitch. This is an iterative process.

## Claims

1. A slider (100) for moving a transducer across the surface of a storage disk while maintaining the transducer in close proximity to the disk surface, said slider comprising:

   two elongated rails (124,126) extending from an upstream region of said slider to a downstream region of said slider, each rail having a surface for facing the disk and being configured to develop relatively high pressure under at least said upstream region of said rail as air flows between the slider and the disk surface to cause said slider to be lifted above the surface of the disk;

   a bridge (122) coupling said two rails to form a cavity (128) therebetween, said cavity developing a subambient pressure that tends to draw said slider toward the surface of the disk;

   characterized by at least one of said rails (124,126) having a region disposed intermediate said upstream region and said downstream region that is configured to relieve said relatively high pressure and induce a relatively low pressure under said intermediate region, said intermediate region including a groove (150,152) positioned to allow air to flow between said cavity and an area outside of said cavity, said at least one rail having a surface downstream of said intermediate region for facing the disk to cause said relatively high pressure that had been developed under said upstream region to substantially redevelop under said downstream region, said groove being oriented and positioned in said at least one rail so that said two rails are asymmetrically configured with respect to each other for non-zero yaw angle air flow directions,

   whereby the distance between said surface of said at least one rail and the disk surface is maintained substantially equal to the distance between said surface of the other said rail and the disk surface as said slider moves across the disk surface.

2. The slider (100) of claim 1 further comprising a ramp section (120) coupled to the upstream portion of said bridge (122).

3. The slider (100) of claim 1 wherein each of said rails comprises said intermediate region.

4. The slider (100) of claim 1 wherein said groove (150, 152) extends across said surface of said at least one rail and intersects an inner wall of said at least one rail at a positive acute angle.

5. The slider (100) of claim 1 wherein said groove (150,152) has parallel sides.

6. The slider (100) of claim 1 further comprising a ramp section (120) disposed adjacent to an upstream portion of said bridge (122), and wherein said rails extend from said ramp section in a manner such that the space between said rails decreases as the rails extend from said ramp section.

7. The slider (100) of claim 1 wherein at least one of said rails (126,124) tapers toward the other one of said rails.

8. The slider (100) of claim 1 wherein said groove (150,152) is positioned in said at least one rail at a location closer to said bridge than to the downstream end of said at least one rail (124, 126).

9. The slider (100) of claim 1 wherein said cavity (128) has a predetermined depth with respect to said surfaces of said rails (124,126), said groove (150,152) having a depth in said at least one rail that is substantially equal to said predetermined depth.

10. The slider (100) of claim 1 wherein said groove (150,152) extends across said surface of said rail (124,126).

11. The slider (100) of claim 1 wherein the other said rail (124,126) has a groove (150,152) disposed intermediate said upstream region and said downstream region that allows air to flow between said cavity and an area outside of said cavity, said groove in the other said rail being oriented and positioned symmetrically to said groove in said at least one rail with respect to zero yaw angle air flow direction.


**Patentansprüche**

1. Gleiter (100) zum Bewegen eines Wandlers über die Oberfläche einer Speicherplatte, während der Wandler in dichter Nähe zur Plattenoberfläche gehalten wird, wobei der Gleiter umfaßt:

zwei von einem Stromaufbereich des Gleiters zu einem Stromabbereich desselben verlaufende, langgestreckte Stege (124, 126), von denen jeder Steg eine der Platte zuzuwendende Fläche aufweist und so konfiguriert ist, daß bei einem Luftstrom zwischen dem Gleiter und der Plattenoberfläche unter zumindest dem Stromaufbereich des Stegs ein vergleichsweise hoher Druck erzeugt wird, um den Gleiter sich über die Plattenoberfläche anheben zu lassen, (und)

eine die beiden Stege unter Bildung einer Ausnehmung (128) dazwischen verbindende Brücke (122), welche Ausnehmung einen Unterumgebungsdruck entwickelt, der bestrebt ist, den Gleiter zur Plattenoberfläche hin zu ziehen,

dadurch gekennzeichnet, daß mindestens einer der Stege (124, 126) einen zwischen dem Stromaufbereich und dem Stromabbereich angeordneten Bereich aufweist, der so konfiguriert bzw. ausgestaltet ist, daß der vergleichsweise hohe Druck gemildert oder abgeschwächt und unter dem Zwischenbereich ein vergleichsweise niedriger Druck induziert wird, der Zwischenbereich eine Rille oder Nut (150, 152) aufweist, die positioniert ist, um Luft zwischen der Ausnehmung und einem Bereich außerhalb der Ausnehmung strömen zu lassen, der mindestens eine Steg eine stromab des Zwischenbereichs gelegene, der Platte zuzuwendende Fläche aufweist, um den unter dem Stromaufbereich entwickelten, vergleichsweise hohen Druck sich unter dem Stromabbereich praktisch erneut entwickeln zu lassen, (und) die Nut in dem mindestens einen Steg so orientiert bzw. ausgerichtet und positioniert ist, daß die beiden Stege für von Null verschiedene Gierwinkel-Luftstromrichtungen zueinander asymmetrisch konfiguriert sind,

wobei bei der Bewegung des Gleiters über die Plattenoberfläche der Abstand zwischen der Fläche des mindestens einen Stegs und der Plattenoberfläche praktisch gleich dem Abstand zwischen der Fläche des anderen Stegs und der Plattenoberfläche gehalten wird.

2. Gleiter (100) nach Anspruch 1, ferner umfassend eine mit dem Stromaufbereich der Brücke (122) verbundene Auflaufflächen- oder Rampensektion (120).

3. Gleiter (100) nach Anspruch 1, wobei jeder der Stege den Zwischenbereich umfaßt.

4. Gleiter (100) nach Anspruch 1, wobei die Nut (150, 152) sich quer über die Fläche des mindestens einen Stegs erstreckt und eine Innenwand des mindestens einen Stegs unter einem positiven spitzen Winkel schneidet.

5. Gleiter (100) nach Anspruch 1, wobei die Nut (150, 152) parallele Seiten bzw. Flanken aufweist.

**6.** Gleiter (100) nach Anspruch 1, ferner umfassend eine nahe einem stromaufseitigen Abschnitt der Brücke (122) angeordnete Auflaufflächen- bzw. Rampensektion (120), und wobei die Stege von der Rampensektion so abgehen, daß sich der Raum zwischen den Stegen im Verlauf der Stege von der Rampensektion hinweg verkleinert.

**7.** Gleiter (100) nach Anspruch 1, wobei mindestens einer der Stege (126, 124) in Richtung auf den anderen Steg schräg verläuft bzw. sich verjüngt.

**8.** Gleiter (100) nach Anspruch 1, wobei die Nut (150, 152) in dem mindestens einen Steg an einer Stelle positioniert ist, die näher zur Brücke als zum Stromabende des mindestens einen Stegs (124, 126) hin gelegen ist.

**9.** Gleiter (100) nach Anspruch 1, wobei die Ausnehmung (128) eine vorbestimmte Tief in bezug auf die Flächen der Stege (124, 126) aufweist und die Nut (150, 152) in dem mindestens einen Steg eine Tiefe besitzt, welche der vorbestimmten Tiefe praktisch gleich ist.

**10.** Gleiter (100) nach Anspruch 1, wobei sich die Nut (150, 152) (quer) über die Fläche des Stegs (124, 126) erstreckt.

**11.** Gleiter (100) nach Anspruch 1, wobei der andere Steg (124, 126) eine zwischen dem Stromaufbereich und dem Stromabbereich angeordnete Nut (150, 152) aufweist, welche Luft zwischen der Ausnehmung und einem Bereich außerhalb der Ausnehmung strömen läßt, und die Nut im anderen Steg in bezug auf die Null-Gierwinkel-Luftstromrichtung zur Nut in dem mindestens einen Steg symmetrisch orientiert und positioniert ist.

**Revendications**

**1.** Coulisseau (100) pour déplacer un transducteur à travers la surface d'un disque de mémorisation tout en maintenant le transducteur à proximité étroite de la surface du disque, ledit coulisseau comportant:

deux rails allongés (124, 126) s'étendant à partir d'une zone amont dudit coulisseau vers une zone aval dudit coulisseau, chaque rail ayant une surface destinée à être en vis-à-vis du disque et étant configuré pour développer une pression relativement élevée sous au moins ladite zone amont dudit rail lorsque de l'air s'écoule entre le coulisseau et la surface du disque pour amener ledit coulisseau a être élevé au-dessus de la surface du disque,

un pont 122 couplant lesdits deux rails pour former une cavité (128) entre eux, ladite cavité développant une pression sous-ambiante qui tend à attirer ledit coulisseau vers la surface du disque,

caractérisé en ce qu'au moins un premier desdits rails (124, 126) comporte une zone agencée entre ladite zone amont et ladite zone aval, qui est configurée pour libérer ladite pression relativement élevée et induire une pression relativement faible sous ladite zone intermédiaire, ladite zone intermédiaire comportant une gorge (150, 152) positionnée pour permettre à l'air de s'écouler entre ladite cavité et une zone extérieure à ladite cavité, ledit au moins un rail ayant une surface en aval de ladite zone intermédiaire destinée à être en vis-à-vis du disque pour entraîner ladite pression relativement élevée qui a été développée sous ladite zone amont à être redéveloppée pratiquement sous ladite zone aval, ladite gorge étant orientée et positionnée dans ledit au moins un rail de sorte que lesdits deux rails soient configurés de manière asymétrique l'un par rapport à l'autre pour des directions d'écoulement d'air à angle de lacet non nulle,

dans lequel la distance existant entre ladite surface dudit au moins un rail et la surface du disque est maintenue à peu près égale à la distance existant entre ladite surface de l'autre dit rail et la surface du disque lorsque ledit coulisseau se déplace à travers la surface du disque.

**2.** Coulisseau (100) selon la revendication 1 comportant en outre un tronçon (120) formant rampe couplé à la partie amont dudit pont (122).

**3.** Coulisseau (100) selon la revendication 1 dans lequel chacun desdits rails comporte ladite zone intermédiaire.

**4.** Coulisseau (100) selon la revendication 1, dans lequel ladite gorge (150, 152) s'étend à travers ladite surface dudit au moins un rail et recoupe la paroi intérieure dudit au moins un rail au niveau d'un angle aigu positif.

5. Coulisseau (100) selon la revendication 1, dans lequel ladite gorge (150, 152) a des côtés parallèles.

6. Coulisseau (100) selon la revendication 1 comportant en outre un tronçon (120) formant rampe disposé de façon adjacente à une partie amont dudit pont (122), et dans lequel lesdits rails s'étendent à partir dudit tronçon formant rampe d'une manière telle que l'espace entre lesdits rails diminue lorsque les rails s'étendent à partir dudit tronçon formant rampe.

7. Coulisseau (100) selon la revendication 1, dans lequel au moins un desdits rails (126, 124) se rapproche de l'autre desdits rails.

8. Coulisseau (100) selon la revendication 1, dans lequel ladite gorge (150, 152) est positionnée dans ledit au moins un rail au niveau d'un emplacement plus proche dudit pont que de l'extrémité aval dudit au moins un rail (124, 126).

9. Coulisseau (100) selon la revendication 1, dans lequel ladite cavité (128) a une profondeur prédéterminée par rapport auxdites surfaces desdits rails (124, 126), ladite gorge (150, 152) ayant une profondeur dans ledit au moins un rail qui est pratiquement égale à ladite profondeur prédéterminée.

10. Coulisseau (100) selon la revendication 1, dans lequel ladite gorge (150, 152) s'étend à travers ladite surface dudit rail (124, 126).

11. Coulisseau (100) selon la revendication 1, dans lequel l'autre dit rail (124, 126) comporte une gorge (150, 152) agencée entre ladite zone amont et ladite zone aval, qui permet à l'air de s'écouler entre ladite cavité et une zone extérieure à ladite cavité, ladite gorge située dans l'autre dit rail étant orientée et positionnée de manière symétrique à ladite gorge située dans ledit au moins un rail par rapport à la direction d'écoulement d'air ayant un angle de lacet nul.

FIG.1

FIG.3

FIG.2

(PRIOR ART)

FIG.5

(PRIOR ART)

FIG.4

FIG.6

FIG. 10

FIG. 8

FIG. 7

PRESSURE FOR INNER RAIL OR OUTER RAIL

PRESSURE

*FIG.9b*

PRESSURE FOR INNER RAIL OR OUTER RAIL

PRESSURE

*FIG.9a* (PRIOR ART)

trailing edge

FIG. 11

CCW

FIG. 13

FIG. 14

150
124    126

152
124    126

FIG. 15

150    124    152
126

FIG. 12